## Europäisches Patentamt

## European Patent Office

## Office européen des brevets

(19)

(11) Veröffentlichungsnummer: **0 118 868**
**A2**

(12) **EUROPÄISCHE PATENTANMELDUNG**

(21) Anmeldenummer: **84102389.8**

(22) Anmeldetag: **06.03.84**

(51) Int. Cl.³: **A 01 B 33/12**

(30) Priorität: **09.03.83 DE 3308245**
**24.02.84 DE 8405618 U**

(43) Veröffentlichungstag der Anmeldung:
**19.09.84 Patentblatt 84/38**

(84) Benannte Vertragsstaaten:
**AT BE DE FR GB IT NL**

(71) Anmelder: **Rabewerk Heinrich Clausing**

**D-4515 Bad Essen 8 - Linne(DE)**

(72) Erfinder: **Warnking, Richard**
**Klockenpatt 5**
**D-4515 Bad Essen 1(DE)**

(72) Erfinder: **Groth, Hermann**
**Im Weidengrund 7**
**D-4515 Bad Essen 1(DE)**

(74) Vertreter: **Patentanwälte Dipl.-Ing. R. Schlee Dipl.-Ing. A.**
**Missling**
**Bismarckstrasse 43**
**D-6300 Giessen(DE)**

(54) Bodenbearbeitungsmaschine.

(57) Die als Krieselegge ausgebildete Bodenbearbeitungsmaschine hat an ihren seitlichen Enden starr angeordnete Schirmplatten (14). Es werden Einrichtungen vorgeschlagen, die bewirken, daß Steine oder andere Hindernisse seitlich aus dem Arbeitsbereich der Maschine auswandern können. Zu diesem Zweck werden entweder Ableitflächen oder Sperrstücke oder ausweichende Verlängerungsschilde (27) am vorderen Ende der Schirmplatte (14) angebracht. Solche Verlängerungsschilde werden durch eine Rückstellkraft (Feder 34) in ihrer normalen Arbeitslage gehalten, die durch Anlage des Verlängerungsschildes (27) an einem Anschlag (35) definiert wird.

Durch die Erfindung wird die Verwendung starr befestigter Schirmplatten ermöglicht, ohne daß die Gefahr einer Beschädigung von Werkzeugen besteht.

Fig.3

S/B 14.747

K A B E W E R K   Heinrich Clausing,
4515 Bad Essen 8-Linne

**Bodenbearbeitungsmaschine**

Die Erfindung bezieht sich auf eine Bodenbearbeitungsmaschine mit mehreren in einer quer zur Fahrtrichtung verlaufenden Reihe angeordneten Werkzeugträgern (Kreisel), die mit nach oben ragenden Antriebswellen in einem Gestell gelagert sind und nach unten ragende Werkzeuge aufweisen, wobei an den seitlichen Enden des Gestells Schirmplatten starr befestigt sind, die ein seitliches Wegschleudern von Erde über die Arbeitsbreite der Maschine hinaus verhindern.

Bodenbearbeitungsmaschinen dieser Art werden auch als Kreiseleggen bezeichnet und sind in der Lage, in einem Arbeitsgang ein fertiges Saatbett zu erzeugen. Die Schirmplatten dienen dem Zweck, die gelockerte und durch die Kreisel umgerührte Erde im Bereich der Arbeitsbreite der Kreiselegge zu halten. Bei einer bekannten Kreiselegge (IT-PS 699 031) sind die Schirmplatten starr mit dem Maschinengestell verbunden. Ihre Höhenlage kann jedoch mit Hilfe von Lochreihen verändert werden, die sich in Tragstäben für die Schirmplatten befinden. Um ihre Abschirmfunktion voll erfüllen zu können, müssen die Schirmplatten verhältnismäßig weit nach vorne und nach hinten über die gedachten vertikalen und quer zur Fahrtrichtung verlaufenden Ebenen hinaus verlängert werden, die die Bewegungsbahnen der Zinken berühren.

Bei starren Schirmplatten besteht die Gefahr, daß dann, wenn feste Stücke, insbesondere Steine, zwischen die äußeren Kreisel und die Schirmplatten geraten, die Maschine beschädigt wird. Man hat deshalb auch schon Schirmplatten vorgesehen, die seitlich ausweichen können (DE-AS 20 42 943, DE-OS 23 24 181). Dies hat jedoch den Nachteil, daß beim Ausweichen die Begrenzungsfunktion der Schilde nicht mehr besteht und deshalb der benachbarte Bodenstreifen mit Erde überdeckt werden kann.

Der Erfindung liegt die Aufgabe zugrunde, eine Bodenbearbeitungsmaschine der eingangs genannten Art, also eine Kreiselegge mit starren Schirmplatten, so auszubilden, daß Steine oder sonstige feste Gegenstände aus dem Bereich der Arbeitsbreite der Maschine nach der Seite entweichen können. Hierfür sollen drei voneinander unabhängige Lösungen vorgeschlagen werden.

Gemäß der ersten Lösung der genannten Aufgabe reichen die vorderen Enden der Schirmplatten nur bis etwa zur vorderen vertikalen Berührungsebene der von den Werkzeugen beschriebenen Bahnen oder überragen diese nur wenig, wobei an den vorderen Enden der Schirmplatten Verlängerungsschilde angeordnet sind, die unter Überwindung einer Rückstellkraft nach außen verschiebbar sind.

Wenn eine so ausgebildete Maschine auf größere feste Hindernisse, also z.B. größere feste Steine trifft, die nicht ohne weiteres zwischen den Kreiseln hindurch oder zwischen den äußeren Kreiseln und der Schirmplatte hindurch die Maschine passieren können, werden diese Hindernisse von den rotierenden Werkzeugen seitlich weggeschafft und kommen schließlich mit den Verlängerungsschilden in Berührung. Diese weichen dann aus, so daß die festen Gegenstände den Arbeitsbereich der Maschine verlassen. Durch die Aufbringung einer Rückstellkraft auf die Verlängerungsschilde erreicht man, daß diese ihre Abschirmfunktion gegen seitliches Abschleudern von Erde erfüllen, solange nicht ein größerer fester Gegenstand angetroffen wird.

Als vorteilhaft haben sich Ausdehnungen der starr befestigten Schirmplatten erwiesen, wie sie im Anspruch 2 angegeben sind.

Eine besonders einfache Konstruktion zur Erzeugung der Rückstellkraft und zur Einhaltung einer normalen Arbeitslage ist im Anspruch 3 angegeben.

Im Prinzip kann jeder Verlängerungsschild sowohl linear verschiebbar, z.B. längs Führungsstangen, als auch schwenkbar sein. Herstellungsmäßig und hinsichtlich Funktionssicherheit ist die Schwenkbarkeit gemäß Anspruch 4 vorzuziehen. Besonders zweckmäßig ist es, wenn der Verlängerungsschild gemäß Anspruch 5 um eine mit den Schirmplatten verbundene Achse schwenkbar ist. Besonders empfiehlt sich diese Anordnung bei höhenverstellbaren Schirmplatten, wie sie in der Regel vorgesehen sind. Bei einer Höhenverstellung nämlich muß dann nicht auch der Verlängerungsschild noch einmal an die neue Höhenlage angepaßt werden.

Es sind verschiedene Lagen für die Schwenkachse möglich. Beispielsweise kann die Schwenkachse gemäß Anspruch 6 oberhalb des oberen Randes des Verlängerungsschildes liegen. Besonders vorteilhaft ist es hierbei, wenn gemäß Anspruch 7 die Schwenkachse vom oberen Rand des Verlängerungsschildes einen Abstand hat, der z.B. die im Anspruch 7 angegebenen Größen haben kann. Durch diese verhältnismäßig hohe Lage der Schwenkachse erhält man eine besonders günstige Bewegungscharakteristik des Verlängerungsschildes. Die Schwenkachse kann sowohl horizontal und parallel zur Fahrtrichtung verlaufen (Anspruch 8) als auch vertikal (Anspruch 9). In diesem Fall erstreckt sich die Achse vorzugsweise längs der Vorderkante der Schirmplatte. Eine vertikale Achse kann jedoch auch längs der Vorderkante des Verlängerungsschildes verlaufen. Auch eine schräg angeordnete Schwenkachse (Anspruch 10) ist möglich, wobei eine solche Achse vorzugsweise in einer vertikalen Ebene liegt, die in Fahrtrichtung verläuft und vorzugsweise am vorderen Ende des Verlängerungsschildes angeordnet ist. Bei einer solchen Anordnung der Schwenkachse führt der Verlängerungsschild gleichzeitig eine seitliche und eine Aufwärtsbewegung aus, während bei vertikalen Achsen nur ein seitliches Ausschwenken stattfindet. Die Bewegungscharakteristik ist besonders günstig, wenn die schräge Achse eine Orientierung gemäß Anspruch 11 hat.

Gemäß einer Weiterbildung der Erfindung (Anspruch 12) ist jede Schirmplatte um eine horizontale Achse seitlich verschwenkbar und durch eine Überlastsicherung in ihrer Arbeitsstellung gehalten. Mit einer solchen Überlastsicherung verhindert man eine Beschädigung der Maschine auch dann, wenn ausnahmsweise ein fester Gegenstand zwischen Schirmplatte und benachbartem Kreisel eingeklemmt wurde. Besonders vorteilhaft sind Überlastsicherungen mit einem Arretierungselement, das bei Überschreitung zulässiger Kräfte auf die Innenseite der Schirmplatte bricht (Anspruch 13). Ein solches Element kann gemäß Anspruch 14 als Arretierungsstift ausgebildet sein. Eine Überlastsicherung dieser Art hat die Eigenschaft, daß zur Auslösung der Überlastsicherung ein Weg der Schirmplatte nicht erforderlich ist, diese also ihre korrekte Lage so lange beibehält, bis tatsächlich unzuträgliche Kräfte auftreten. Bei einer seitlich ausweichenden Schirmplatte ist es besonders vorteilhaft, gemäß Anspruch 15 die Schirmplatte und den Verlängerungsschild auf der gleichen horizontalen Achse zu lagern. Eine Schwenkachse für die Schirmplatte hat vorzugsweise die im Anspruch 16 angegebene Höhenlage.

Bei Schwenkbarkeit der Schirmplatte um eine im wesentlichen vertikale Achse (Anspruch 17) ist es vorteilhaft, die Überlastsicherung im Abstand von der Achse anzuordnen, vorzugsweise im hinteren Bereich der Schirmplatte. Man erhält dann wegen des großen Hebelarmes bezüglich der vertikalen Achse eine große Haltekraft auch bei relativ schwacher Ausbildung der Überlastsicherung. Die Überlastsicherung kann auch in diesem Fall ein abreißbares Element, wie einen Abreißbolzen oder einen Scherstift aufweisen (Anspruch 18). Der Bolzen kann dabei eine Hülse durchgreifen, die fest mit dem Gestell verbunden ist (Anspruch 19). Wenn die vertikale Schwenkachse durch eine mit der Schirmplatte verbundene vertikale Stange gebildet ist (Anspruch 20), kann auf einfache Weise auch eine Höhenbeweglichkeit der Schirmplatte verwirklicht werden.

Gemäß der zweiten Lösung der Erfindungsaufgabe ist am vorderen Ende jeder Schirmplatte eine schräge Leitfläche angeordnet, die bis nahe an den der Schirmplatte benachbarten Kreisel heranreicht und ausgehend von dem dem Kreisel benachbarten Ende nach vorne außen verläuft (Anspruch 21).

Eine solche Leitfläche bildet einen Abweiser, der verhindert, daß größere feste Gegenstände zwischen Schirmplatte und benachbarten Kreisel gelangen. Die Leitfläche deckt den Zutritt zum Zwischenraum zwischen äußerem Kreisel und Schirmplatte ab.

0118868

Vorzugsweise ist die Leitfläche gemäß Anspruch 22 senkrecht angeordnet und erstreckt sich vorzugsweise so, wie im Anspruch 23 angegeben. Baulich besonders einfach läßt sich die Leitfläche durch eine Abbiegung der Schirmplatte gemäß Anspruch 24 verwirklichen.

Gemäß der dritten Lösung der Erfindungsaufgabe, die im Anspruch 25 angegeben ist, reicht die Vorderkante jeder Schirmplatte nur bis zur vorderen vertikalen Berührungsebene der von den Werkzeugen beschriebenen Bahnen oder überragt diese nur wenig, wobei am vorderen Ende der Schirmplatte ein Verschlußstück angeordnet ist, das bis nahe an die Bewegungsbahn der Werkzeuge des der Schirmplatte benachbarten Kreisels heranreicht und den Zwischenraum zwischen dieser Bewegungsbahn und der Schirmplatte abschließt.

Dadurch wird wiederum verhindert, daß größere feste Gegenstände zwischen Schirmplatte und benachbarten Kreisel gelangen. Für den Abstand zwischen Verschlußstück und Werkzeugbahn des Kreisels sind die im Anspruch 26 angegebenen Größen gut geeignet. Ein Verschlußstück mit bogenförmiger Fläche gemäß Anspruch 27 ergibt einen besonders wirksamen Abschluß. Dabei hat die Schirmplatte vorzugsweise die in Anspruch 28 angegebene Erstreckung.

Um seitlich abgeschleuderte Erde wieder in den Bereich der Arbeitsbreite zu bringen und einzuebnen, können gemäß Anspruch 29 Streifschienen vorgesehen sein, die vorzugsweise entsprechend dem Anspruch 26 ausgebildet sind.

In der Regel sind Schirmplatten höhenverstellbar, um die Maschine an verschiedene Arbeitstiefen und auch an die Abnutzung von Werkzeugen anpassen zu können (Anspruch 31). Es ist dann vorteilhaft, die zuvor beschriebenen Einrichtungen mit der Schirmplatte zu verbinden (Anspruch 32), um so diese Einrichtungen gleichzeitig mit der Schirmplatte in die gewünschte Höhenlage zu bringen. Dies wurde weiter oben bereits im Zusammenhang mit Verlängerungsschilden angegeben, ist aber ebenso zweckmäßig für die beiden anderen Lösungen der Erfindungsaufgabe. Man kann jedoch auch unabhängige Verstellungen im Prinzip vorsehen (Anspruch 33), wenn dies aus konstruktiven Gründen vorteilhafter ist.

Man kann im Zusammenhang mit der Erfindung auch frei höhenverschiebbare Schirmplatten gemäß Anspruch 34 vorsehen. In diesem Fall ist es zwingend, die erfindungsgemäßen Einrichtungen an der Schirmplatte selber zu lagern, es sei denn,daß diese Einrichtungen ihrerseits frei höhenverstellbar sind.

Eine Anlaufschräge am Verlängerungsschild gemäß Anspruch 35 hat den Vorteil, daß der Schild leicht auf Bodenunebenheiten, z.B. Erdbrocken, aufgleiten kann. Dieser Vorteil ist besonders wichtig im Zusammenhang mit Konstruktionen, bei dem der Verlängerungsschild samt Schirmplatte frei höheneinstellbar ist.

In der Zeichnung sind Ausführungsbeispiele der Erfindung dargestellt. Es zeigen:

Fig. 1 eine Vorderansicht einer Kreiselegge entsprechend dem Pfeil I in Fig. 2,

Fig. 2 eine Draufsicht auf die Kreiselegge entsprechend dem Pfeil II in Fig. 1,

Fig. 3 eine Seitenansicht der Kreiselegge entsprechend dem Pfeil III in Fig. 1 in einem gegenüber den Fig. 1 und 2 vergrößerten Maßstab,

Fig. 4 einen vergrößerten Ausschnitt aus Fig. 1 im Bereich des strichpunktierten Rahmens IV in Fig. 1,

Fig. 5 eine Schirmplatte mit zugeordnetem Verlängerungsschild, wobei die Rückstelleinrichtung im Vergleich mit der Ausführungsform nach den

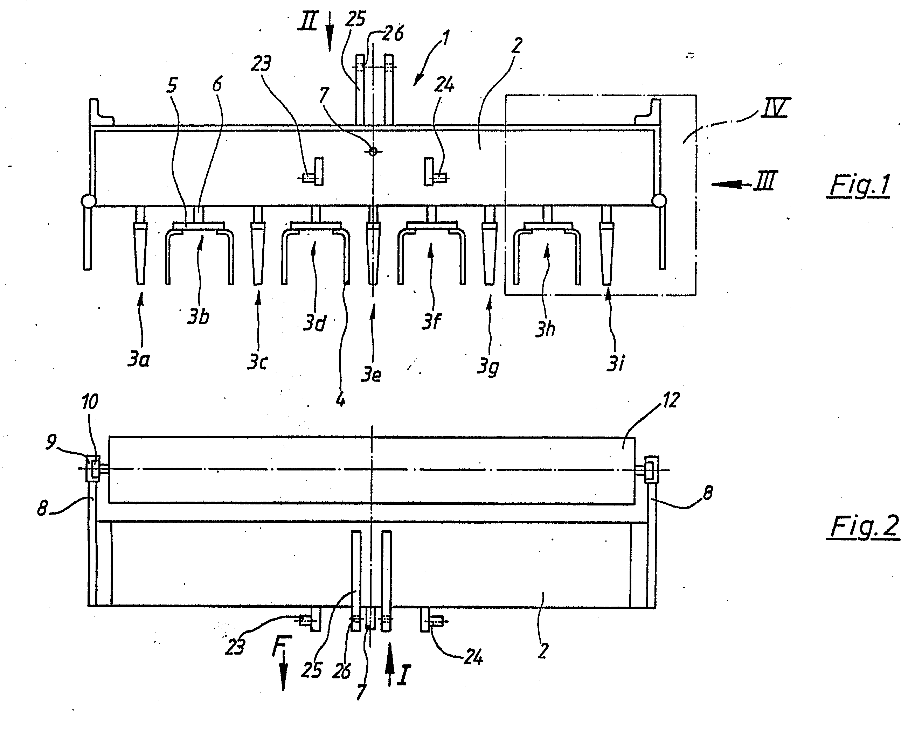

Fig. 1 bis 4 abgewandelt ist,

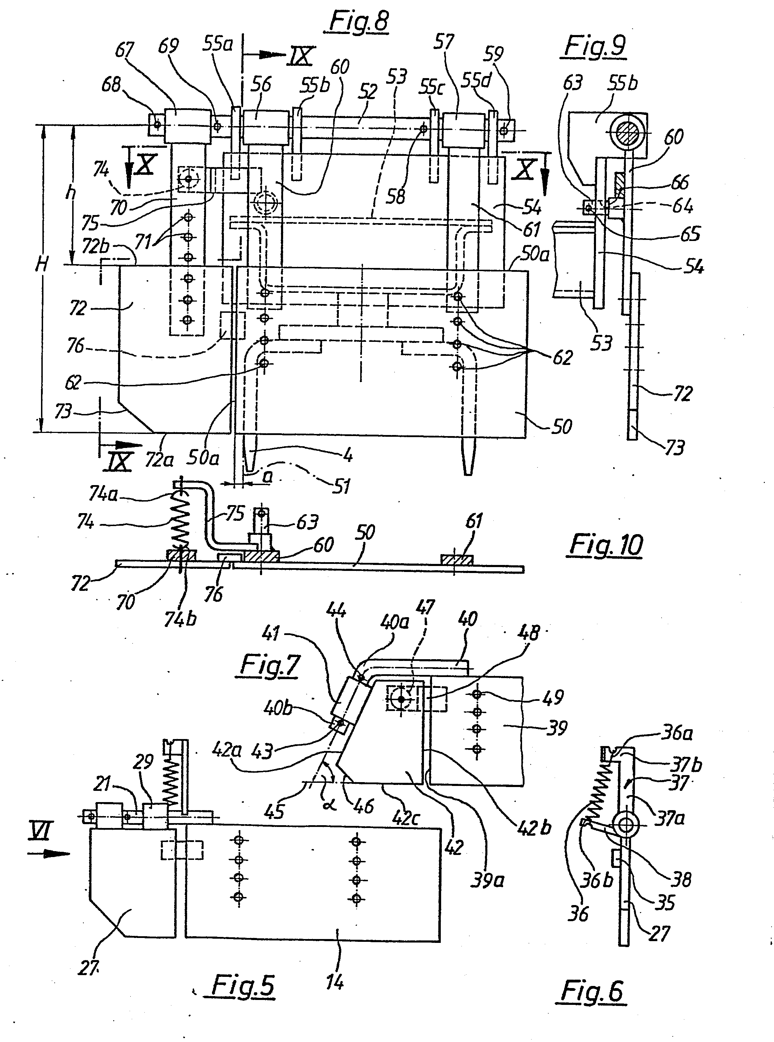

Fig. 6    eine Ansicht der Anordnung nach Fig. 5 in
Richtung des Pfeiles VI in Fig. 5,

Fig. 7    eine Teilansicht einer Schirmplatte mit Verlängerungsschild gemäß einer dritten Ausführungsform der Erfindung,

Fig. 8    eine Seitenansicht einer Schirmplattenanordnung gemäß einem vierten Ausführungsbeispiel
der Erfindung, wobei die Schirmplatte seitlich ausweichen kann und durch eine Überlastsicherung in ihrer Arbeitslage gehalten wird,

Fig. 9    einen Schnitt nach Linie IX-IX in Fig. 8,

Fig.10    einen Schnitt nach Linie X-X in Fig. 8,

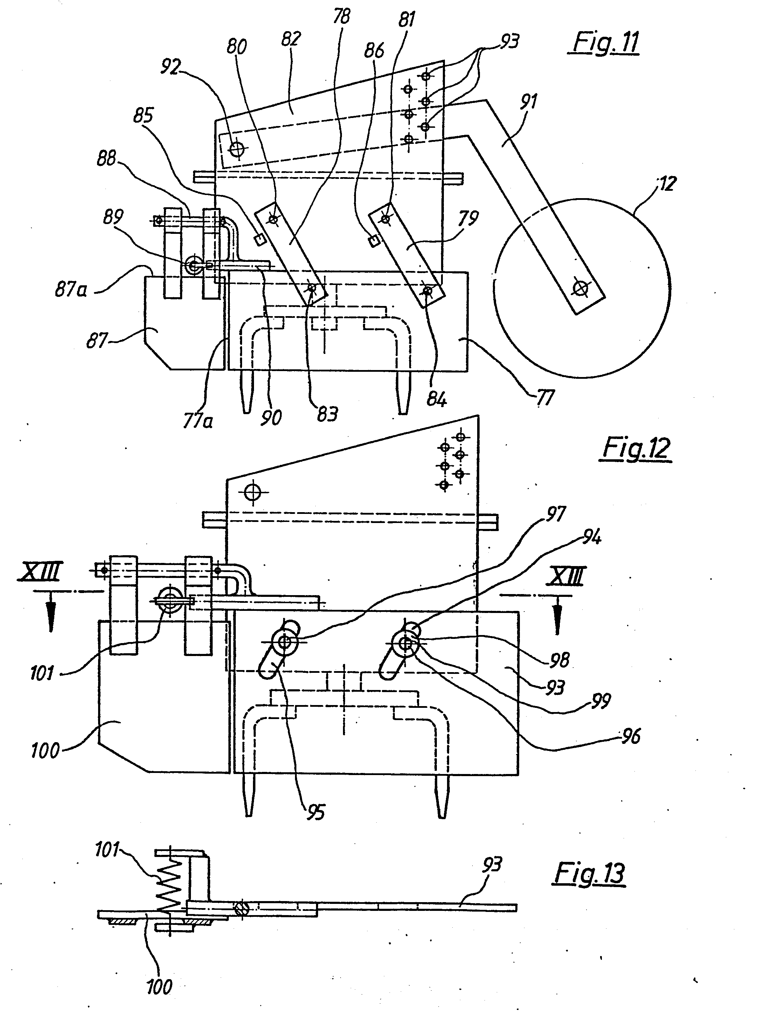

Fig.11    eine Seitenansicht einer Kreiselegge gemäß
einer fünften Ausführungsform der Erfindung,
bei der die Schirmplatte höhenbeweglich ist,

Fig.12    eine Seitenansicht einer sechsten Ausführungsform, bei der die Schirmplatte stufenlos höhenverstellbar oder höhenbeweglich ist,

Fig.13    einen Schnitt nach Linie XIII-XIII in Fig.12,

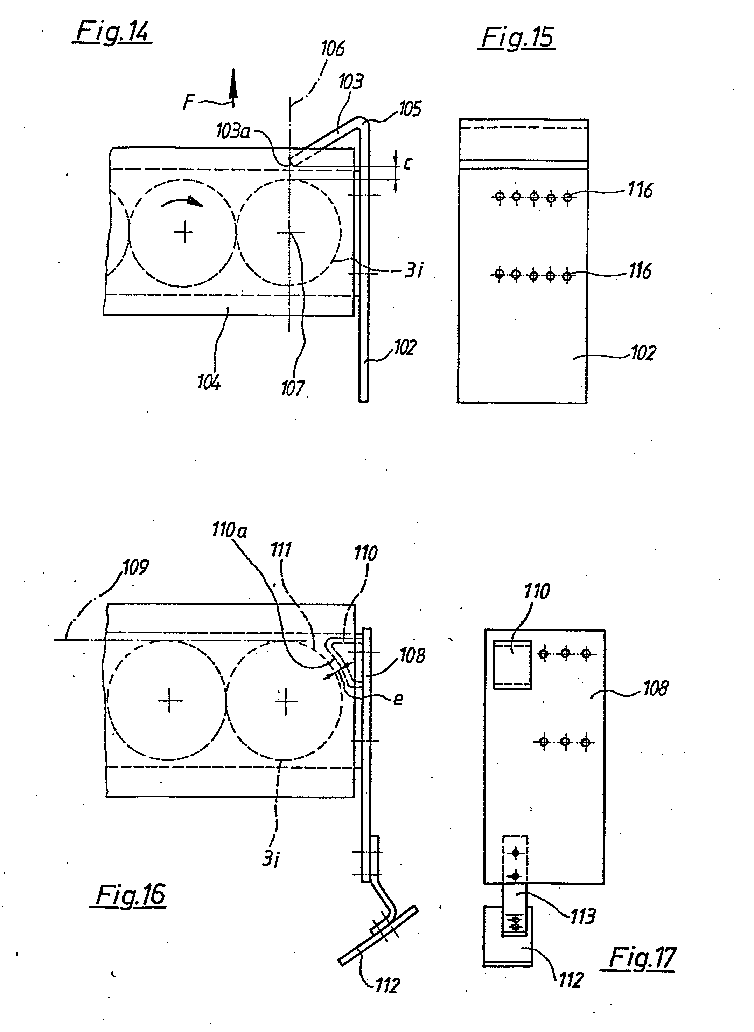

Fig.14    eine Draufsicht auf ein seitliches Ende einer
Kreiselegge gemäß einer siebten Ausführungsform der Erfindung mit Leitflächen an der
Schirmplatte,

Fig.15    eine Ansicht der Schirmplatte, die bei der
Ausführungsform nach Fig. 14 verwendet ist,

Fig. 16    eine Draufsicht auf ein seitliches Ende
           einer Kreiselegge gemäß einer achten Ausführungsform der Erfindung,

Fig. 17    eine Seitenansicht einer Schirmplatte,
           wie sie bei der Ausführungsform nach Fig.16
           verwendet ist,

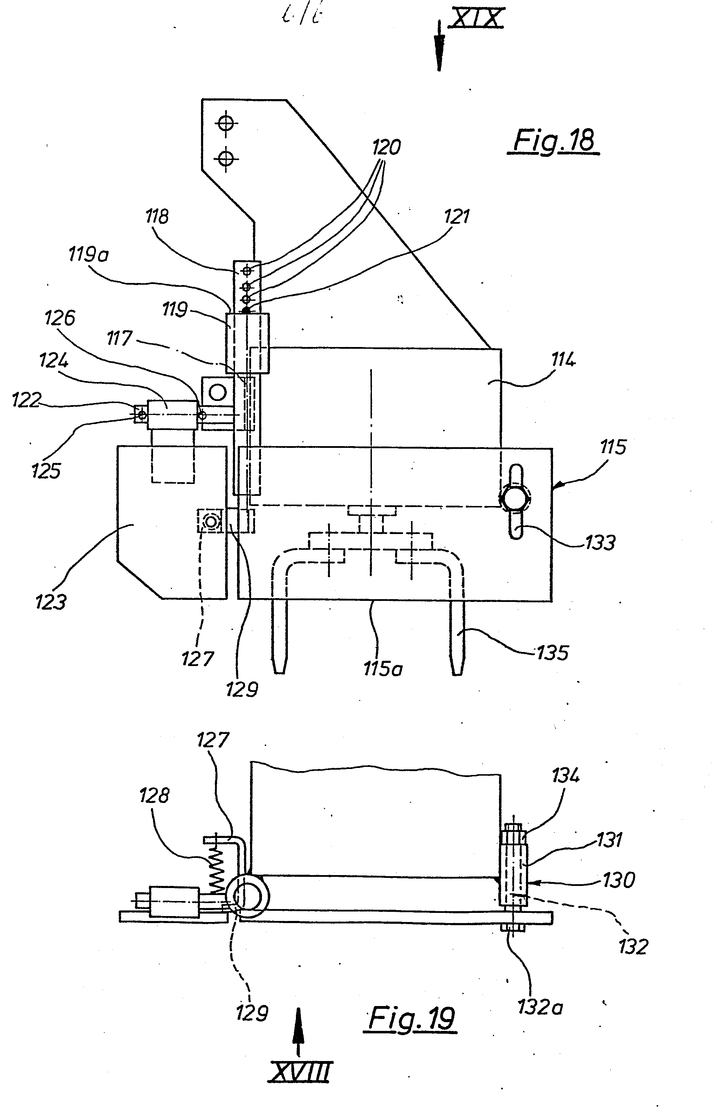

Fig. 18    eine Seitenansicht einer Kreiselegge
           gemäß einer neunten Ausführungsform der
           Erfindung und

Fig. 19    eine teilweise Draufsicht auf die Kreiselegge nach Fig. 18 nach dem Pfeil XIX in
           Fig. 18.

Die in den Fig. 1 bis 4 dargestellte Kreiselegge hat ein
insgesamt mit 1 bezeichnetes Gestell, dessen wesentlicher
Teil ein Getriebekasten 2 ist. Im Getriebekasten 2 sind
insgesamt neun Kreisel  3a bis 3i drehbar gelagert. Die
Kreisel sind in einer Reihe angeordnet. Jeder Kreisel hat
zwei um 180° gegeneinander versetzte Werkzeuge 4. Jeder
Kreisel hat einen Werkzeugträger 5, von dem die Werkzeuge 4
nach unten und eine Antriebswelle 6 nach oben abragt. Die
Wellen 6 sind im Getriebekasten 2 gelagert. Jede Welle
trägt ein Stirnzahnrad, das mit dem Stirnzahnrad der benachbarten Welle 6 kämmt. Ein Kreisel wird über ein Winkelgetriebe und einen Zapfwellenanschluß 7 angetrieben.
Alle Kreisel sind also getriebemäßig miteinander gekuppelt
und rotieren gegenläufig.Benachbarte Kreisel sind um 90°
gegeneinander phasenverschoben. Die Bewegungsbahnen der Werkzeuge 4 überlappen sich vorzugsweise.

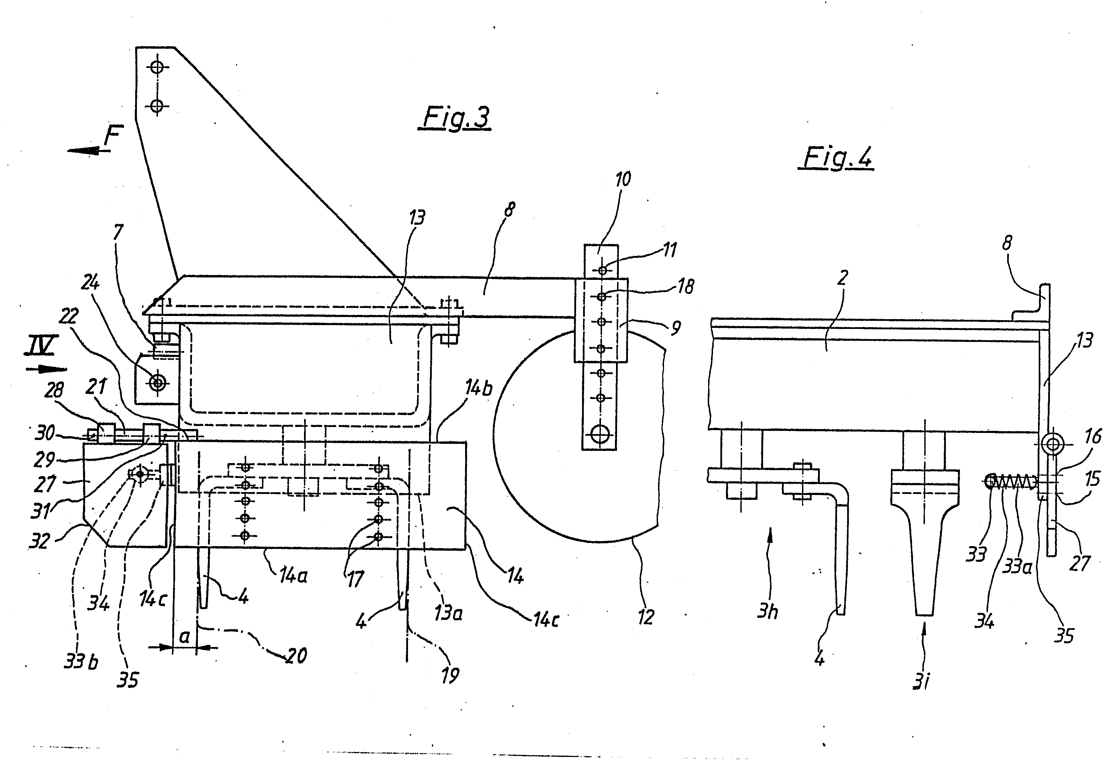

Vom Getriebekasten 2 ragen nach hinten Träger 8 ab, die
an ihrem hinteren Ende eine Hülse 9 tragen. In der Hülse 9
sind Stützen 10 höhenverstellbar und mittels einer Reihe
aus Löchern 11 (siehe Fig. 3) höhenverstellbar. Die Stützen
10 tragen eine Nachlaufwalze 12.

Zur Befestigung der Maschine an einem Schlepper dienen Anlenkzapfen 23, 24 für die Unterlenker eines Schlepper-Dreipunktgestänges und ein Dreipunktturm 25 für die Befestigung des Oberlenkers des Schlepper-Dreipunktgestänges. Zu diesem Zweck sind am Dreipunktturm 25 Bohrungen 26 vorgesehen.

Die bis jetzt genannten Konstruktionsmerkmale sind Standardmerkmale einer Kreiselegge und bedürfen deshalb keiner näheren Erläuterung.

An jedem seitlichen Ende des Getriebekastens 2 befindet sich eine Endplatte 13, an der eine Schirmplatte 14 befestigt ist. Zur Befestigung der Schirmplatte dienen Schrauben 15, 16, die durch Löcher in der Schirmplatte 14 und in der Seitenplatte 13 hindurchgesteckt sind. Um eine Höhenverstellung zu ermöglichen, sind an der Schirmplatte vertikale Reihen aus Schraubendurchstecklöchern 17 vorgesehen. Jede Schirmplatte hat eine rechteckige Form. Ihre horizontal verlaufende Unterkante 14a hat eine solche Höhenlage, daß sie auf den Boden entlangstreift oder einen nur kleinen Abstand vom Boden hat. Die richtige Einstellung kann mit Hilfe der genannten Lochreihen aus den Löchern 17 hergestellt werden. Die Arbeitstiefe des Gerätes wird im übrigen durch geeignete Höheneinstellung der Nachlaufwalze 12 bewirkt. Deren Höhenlage kann dadurch verändert werden, daß die Stützen 10 in den Hülsen 9 verschoben werden. Die ausgewählte Höhenlage wird durch Steckbolzen gesichert, die durch die Löcher 11 und damit fluchtende Löcher 18 in der Hülse 9 hindurchgesteckt wird. Die Oberkante 14b liegt oberhalb der Unterkante 13a der Endplatte 13. Die Hinterkante 14c liegt relativ weit hinter der Vertikalen und quer zur Fahrtrichtung verlaufenden hinteren Berührungsebene an die Umlaufbahnen der Werkzeuge 4. Die Fahrtrichtung des Gerätes entspricht dem Pfeil F in den Fig. 2 und 3. Die Vorderkante 14c der Schirmplatte 14 hat einen nur kleinen Abstand a von der vertikalen und quer zur Fahrtrichtung verlaufenden vorderen Berührungsebene 20 an die Umlaufbahnen der Werkzeuge 4. Der Überstand a liegt vorteilhafterweise im Bereich von 0 bis 4 cm. Der Abstand a kann auch Null sein oder auch etwas negativ, d.h. die Vorderkante 14c kann gegenüber der Ebene 20 auch nach hinten, in Fig. 3 gesehen also nach rechts, versetzt sein.

Im vorderen Bereich der Schirmplatte 14 ist an deren Oberkante 14b eine Achse 21 mittels einer Schweißnaht 22 befestigt.

Auf der Achse 21 ist ein Verlängerungsschild 27 schwenkbar gelagert. Am oberen Ende des Verlängerungsschildes sind Hülsen 28, 29 angeschweißt, die auf der Achse 21 drehbar sind. Zur axialen Fixierung des Verlängerungsschildes 27 dienen Querstifte 30, 31, die die Achse 21 durchgreifen.

Der Verlängerungsschild 27 ist im wesentlichen rechteckig, jedoch ist seine untere vordere Ecke durch eine Abschrägung 32 weggeschnitten. Die schräge Kante 32 erleichtert das Aufgleiten der Schutzvorrichtung auf Hindernisse.

Von der Endplatte 13 ragt ein Stab 33 ab. Dieser Stab hat eine Winkelform. Ein erster Schenkel 33a verläuft quer zur Fahrtrichtung, während ein zweiter Schenkel 33b in Fahrtrichtung vorragt. An diesem Schenkel 33b ist eine Schraubenzugfeder 34 mit einem Ende angehängt. Das andere Ende der Schraubenzugfeder greift am Verlängerungsschild 27 an. Die Schraubenzugfeder 37 versucht den Verlängerungsschild 27 nach innen zu ziehen, d.h. in Fig. 4 gesehen in Richtung des Uhrzeigers.

Um eine definierte Lage des Verlängerungsschildes zu erhalten, ist ein Anschlag 35 vorgesehen, der aus einem an der Schirmplatte 33 angeschweißten und in Fahrtrichtung vorragenden Blech besteht. Die Feder 34 hat eine solche Vorspannung, daß der Verlängerungsschild 27 mit einer verhältnismäßig großen Kraft gegen den Anschlag 35 gezogen wird. Wegen der Anordnung der Feder und des Anschlages wird auch auf Fig. 10 verwiesen, die eine entsprechende Anordnung in der Draufsicht zeigt.

Die Maschine arbeitet wie folgt. Bei der Arbeit wird die Kreiselegge mittels eines Schleppers in Richtung des Pfeiles F gezogen, wobei das Gewicht der Maschine zum großen Teil auf der Nachlaufwalze 12 abgestützt ist. Die Kreisel 3a bis 3i rotieren gegenläufig. Die Werkzeuge 4 greifen in den Boden ein, brechen diesen auf und zerkleinern grobe Schollen. Von den Kreiseln nach außen geschleuderte Erde wird an den Schirmplatten 14 und ihren Verlängerungsschilden 27 abgefangen und dadurch im Bereich der Arbeitsbreite des Gerätes gehalten. Die Arbeitsbreite reicht von einer Schirmplatte 14 bis zur gegenüberliegenden Schirmplatte 14. Wenn nun feste Brocken, insbesondere Steine, größerer Abmessungen angetroffen werden, können diese nicht zwischen den Werkzeugen hindurch bzw. zwischen den Werkzeugen und den Schirmplatten 14 hindurch die Kreiselegge passieren. Sie werden deshalb von den Werkzeugen immer wieder nach vorne geschleudert und gelangen schließlich in die seitlichen Bereiche der Kreiselegge. Wenn sie dann mit großer Kraft an die Verlängerungsschilde anstoßen, werden diese unter Spannung der Federn 34 ausgeschwenkt und die Steine oder sonstigen Brocken können den Arbeitsbereich der Kreiselegge verlassen. Nachdem ein Stein oder dergleichen einen Verlängerungsschild 27 passiert hat, wird dieser durch die Kraft der Feder 34 in seine Normalstellung zurückgezogen, bis er am Anschlag 35 zur Anlage gekommen ist.

Durch die Anordnung der Rückzugseinrichtung mit der Feder 34 an der Innenseite des Verlängerungsschildes erreicht man, daß nach außen vorragende Teile, die die Transportbreite des Gerätes vergrößern würden, vermieden werden. Wenn es auf die Einhaltung einer bestimmten Transportb-reite nicht ankommt, könnte die Vorrichtung auch anders angeordnet werden. Anstelle einer Schraubenzugfeder könnte man beispielsweise auch eine Biegefeder verwenden, z.B. eine Biegefeder mit mehreren Windungen, die die Achse 21 umgibt und mit einem Schenkel auf den Seitenschild 27 drückt.

Die Fig. 5 und 6 zeigen eine Anordnung, die sich von der Anordnung nach den Fig. 1 bis 4 nur wenig unterscheidet. Der einzige Unterschied besteht darin, daß die Rückzugseinrichtung für den hier ebenfalls mit 27 bezeichneten Verlängerungsschild etwas anders ausgebildet ist. Zum Festhalten in der Arbeitsstellung und zum Zurückziehen aus einer ausgelenkten Stellung dient ebenfalls eine Schraubenzugfeder 36, die jedoch anders aufgehängt ist. Ihr eines Ende 36a ist an einem winkligen Arm 37 angehängt, der einen auf der Achse 21 befestigten senkrechten Teil 37a und einen kurzen horizontalen Teil 37b hat. An der hinteren Hülse 29 des Seitenschildes ist ein weiterer Arm 38 angeschweißt, der ausgehend von seiner Befestigungsstelle leicht ansteigend verläuft. An diesem Arm ist das andere Federende 36b eingehängt. Insbesondere die Betrachtung der Fig. 6 zeigt, daß die Feder ein Drehmoment ausübt, das in Fig. 6 gesehen, im Uhrzeigersinn wirkt, so daß der Verlängerungsschild 27 gegen einen mit der Schirmplatte 14 verbundenen, vorzugsweise verschweißten Anschlag 35 gezogen wird. Durch die Anordnung nach den Fig. 5 und 6 erhält die Feder einen größeren Abstand vom Boden und ist deshalb auch weniger durch hochgeschleuderte Steine gefährdet.

Bei der Ausführungsform nach Fig. 7 ist am oberen Ende einer Schirmplatte 39 ein Rundstab 40 angeschweißt, der über eine Krümmung 40a in einen geneigten Teil 40b übergeht. Der geneigte Teil 40b bildet die eigentliche Schwenkachse. Auf den Teil 40b ist eine Hülse 41 aufgeschoben, die mit einem Verlängerungsschild 42 verbunden ist. Axial wird die Hülse 41 auf der Achse 40b durch Querstifte 43 und 44 festgelegt. Die Achse 40b liegt in einer vertikalen Ebene und schließt mit der Horizontalen 45 einen Winkel $\alpha$ ein, der kleiner ist als 90°.

Der Verlängerungsschild 42 ist im wesentlichen trapezförmig, wobei jedoch seine untere vordere Ecke eine Anschrägung 46 aufweist. Die Neigung der Vorderkante 42a stimmt überein mit der Neigung $\alpha$ der Achse 40b.

Auch dem Verlängerungsschild 42 sind eine Rückzugeinrichtung mit einer Feder 47 und ein Anschlag 48 zugeordnet. Diese Rückzugeinrichtung entspricht derjenigen nach Fig.10, die noch besprochen werden wird.

Bei der Arbeit mit einem Gerät, das seitliche Schutzvorrichtungen gemäß Fig. 7 aufweist, führen die Seitenschilde 42 beim Ausschwenken eine Bewegung aus, die schräg nach vorne oben gerichtet ist. Im Gegensatz zu den Vorrichtungen nach den Fig. 1 bis 6 wird die Vorderkante 42a des Seitenschildes nicht wesentlich verlagert, vielmehr weichen hauptsächlich die Hinterkante 42b und die Unterkante 42c aus. Es wird also sozusagen ein Durchlaß zwischen der Achse 40b und der Vorderkante 39a der Schirmplatte 39 freigegeben.

Auch die Schirmplatte 39 ist höhenverstellbar dank einer Lochreihe 49.

Die Fig. 8 bis 10 zeigen eine Konstruktion mit seitlich ausschwenkbarer Schirmplatte 50. Die Vorderkante 50a der Schirmplatte hat wiederum einen nur kleinen Abstand a' von der vorderen Berührungsebene 51 an die von den Zinken 4 beschriebenen Bahnen. Die Schirmplatte ist insgesamt rechteckig. Sie ist um eine relativ hoch angeordnete Achse 52 schwenkbar. Die Achse 52 ist an einer am äußeren Ende des Getriebekastens 53 befestigten Endplatte 54 befestigt. Zu diesem Zwecke hat die Endplatte vier Lagerböcke 55a bis 55d. Die Lagerböcke 55a/55b und 55c/55d bilden Paare, die jeweils eine auf der Achse 52 drehbare Hülse 56, 57 einschließen und damit axial fixieren. Die Achse 52 ihrerseits ist durch Querstifte 58, 59 in axialer Richtung fixiert.

Mit den Hülsen 56, 57 sind nach unten ragende Tragstangen 60, 61 verbunden, die als Flacheisen ausgebildet sind. Die Schirmplatte 50 ist mit den Tragstangen 60, 61 durch Schrauben verbunden, die jedoch in der Zeichnung nicht dargestellt sind. Die Höhenlage der Schirmplatte 50 kann dadurch geändert werden, daß die Befestigungsschrauben geeignete Löcher 62 von vertikalen Lochreihen durchgreifen.

Am vorderen Tragarm 60 ist ein Haltebolzen 63 befestigt, der ein Loch 64 in der Endplatte 54 durchgreift. Der Haltebolzen ist von einem Querstift 65 durchgriffen, der ein Herausziehen des Bolzens 63 aus dem Loch 64 verhindert. Der Querstift 65 ist jedoch so dimensioniert, daß er abgeschert werden kann, wenn unzuträglich große Kräfte auf die Schirmplatte 50 derart einwirken, daß diese in Fig. 9 gesehen nach rechts gedrückt wird. Der Arm 60 liegt an einer Schulter 66 des Bolzens 63 an, wodurch eine Verschwenkung der Schirmplatte im Uhrzeigersinn über die senkrechte Lage hinaus verhindert wird. Die senkrechte Lage wird also einmal durch die Schulter 66 und zum anderen durch den Querstift 65 fixiert.

Die Achse 52 ragt über den Lagerbock 55a nach links vor. Auf diesem frei vorragenden Ende ist eine Hülse 67 drehbar gelagert. Axial ist die Hülse 67 durch Querstifte 68, 69 fixiert. Mit der Hülse 67 ist ein nach unten ragender Tragarm 70 verbunden, der eine vertikale Reihe aus Löchern 71 aufweist. Am Tragarm 70 ist ein im wesentlichen rechteckiger Verlängerungsschild 72 befestigt. Die untere vordere Ecke des Verlängerungsschildes 72 ist durch eine Abschrägung 73 abgeschnitten.

Eine Rückstellvorrichtung für den Verlängerungsschild 72 ist am besten aus Fig. 10 zu erkennen. Hauptbestandteil dieser Rückstellvorrichtung ist eine Schraubenzugfeder 74, die mit einem Ende 74a an einem Z-förmigen Arm 75 angreift, während das andere Federende 74b an dem Tragarm 70 angehängt ist. Der Z-förmige Arm 75 ist an dem Tragarm 60 der Schirmplatte 50 befestigt. Die Feder 74, die eine entsprechende Vorspannung hat, zieht den Verlängerungsschild 72 gegen einen Anschlag 76, der an der Schirmplatte 50 angeschweißt ist.

Bei der normalen Arbeit bleiben alle Teile der Abschirmvorrichtung in der gezeichneten Lage. Wenn größere Steine oder sonstige Brocken die Kreiselegge nicht nach hinten passieren können, werden sie durch Ausschwenken des Verlängerungsschildes 72 aus dem Bereich der Kreiselegge auswandern, wobei der Verlängerungsschild in ähnlicher Weise ausklappt, wie dies anhand der Fig. 1 bis 6 beschrieben wurde. Die Tatsache, daß die Schwenkachse 52 sehr hoch liegt, ergibt eine Bewegungscharakteristik des Verlängerungsschildes 72 derart, daß sich seine Unterkante 72a nur wenig vom Boden entfernt. Nur ausnahmsweise wird auch die Schirmplatte 50 ausschwenken, nämlich dann, wenn ein harter Gegenstand, z.B. ein Stein, zwischen den benachbarten Kreisel und die Schirmplatte 50 eingeklemmt wird und die zulässigen Kräfte nicht zur Zertrümmerung des eingeklemmten Gegenstandes ausreichen. In diesem Fall wird der Querstift 65 so stark auf Scherung beansprucht, daß er bricht, wonach die Schirmplatte um die Achse 52 ausschwenken kann. Der Verlängerungsschild 52 wird hierbei mitgenommen. Eine zusätzliche Spannung der Feder 74 ist hierbei nicht erforderlich, da der Haltearm 75 zusammen mit dem Tragarm 60 nach außen verschwenkt wird. Wenn die Arbeit fortgesetzt werden soll, wird die Schirmplatte 50 wieder in ihre Normallage gedrückt, wobei der Bolzen 63 durch das Loch 64 hindurchdringt. Es wird nun ein neuer Querstift 65 eingeführt. Ein Ausschwenken der Schirmplatte 50 wird nur in seltenen Fällen vorkommen, da Steine oder sonstige Hindernisse in der Regel unter Ausschwenkung des Verlängerungschildes 72 aus dem Bereich der Kreiselegge auswandern werden.

Die Höhe h, um die die Schwenkachse 52 gegenüber den Oberkanten 50a der Schirmplatte und 72b des Verlängerungsschildes 72 nach oben versetzt ist, ist im vorliegenden Fall etwa gleich der Höhe dieser Schilde. Die Höhe h kann z.B. ca. 20 cm betragen. Die Gesamthöhe H von den Unterkanten der Platten 50, 72 bis zur Achse 52 liegt vorzugsweise im Bereich von 40 cm bis 60 cm. Da der Verlängerungsschild 72 höhenverstellbar ist, sind die Maße h und H bei einer gegebenen Maschine variabel. Die angegebenen Werte sind deshalb als Richtwerte für die Größenordnung zu verstehen.

Fig. 11 zeigt eine Ausführungsform mit einer Schirmplatte 77, die derart schwimmend angeordnet ist, daß sie während des Betriebes ihre Höhenlage ändern kann. Zu diesem Zweck ist eine parallelogrammartige Aufhängung mit Parallelogrammlenkern 78, 79 vorgesehen. Die Parallelogrammlenker 78, 79 sind mittels Gelenken 80 , 81 an einer Seitenplatte 82 schwenkbar gelagert. An den unteren Enden der Parallelogrammlenker ist die Schirmplatte 77 mittels Gelenken 83 und 84 gehalten. An der Endplatte 82 befinden sich Anschläge 85, 86, die die tiefste Lage der Schirmplatte 77 bestimmen.

An die Vorderkante 77a schließt wieder ein Verlängerungsschild 87 an, der an einer horizontalen und in Fahrtrichtung orientierten Schwenkachse 88 schwenkbar gelagert ist. Die Schwenkachse liegt wieder wesentlich höher als die Oberkante 87a des Verlängerungsschildes 87. Als Rückzugseinrichtung ist wieder eine Feder 89 vorgesehen, die in gleicher Weise funktioniert, wie dies bereits mehrfach beschrieben wurde.

Die Schwenkachse 88 ist bei 90 mit der Oberkante der Schirmplatte 77 verbunden, so daß der Verlängerungsschild 87 vertikale Bewegungen der Schirmplatte 77 mitmachen muß.

Die Arbeitstiefe der Maschine wird durch eine Nachlaufwalze 12' bestimmt, die hier an Schwenkarmen 91 drehbar gelagert ist. An jeder Seite der Maschine befindet sich ein solcher Schwenkarm, der um ein Gelenk 92 schwenkbar ist und dessen Schräglage durch Stifte arretierbar ist, die durch ausgewählte Bohrungen 93 hindurchgesteckt werden.

Die Ausführungsform nach Fig. 11 hat den Vorteil, daß eine selbsttätige Anpassung der Schirmplatte 77 und des Verlängerungsschildes 87 an die jeweilige Arbeitstiefe entsteht,

so daß Verstelloperationen an den Schirmplatten 77 nicht erforderlich sind. Zur Erleichterung der Höhenbewegung ist vorne unten am Verlängerungsschild 87 wieder eine Anlaufschräge vorgesehen.

Bei der Ausführungsform nach Fig. 12 ist eine Schirmplatte 93 stufenlos höhenverstellbar oder höhenbeweglich. Zu diesem Zweck sind in der Schirmplatte 93 zwei schräge, zueinander parallele Langlöcher 94, 95 vorgesehen, die von Bolzen 96, 97 durchgriffen sind. Auf jedem Bolzen sitzt eine Scheibe 98, die durch einen Querstift 99 axial gesichert ist. Die maßliche Abstimmung ist so, daß eine selbsttätige Vertikalverschiebung möglich ist.

Man kann die Ausführungsform nach Fig. 12 auch so ausführen, daß die Bolzen 96, 97 als Klemmschrauben ausgebildet werden, so daß der Schild 93 in jeder gewünschten Höhenlage festgeklemmt werden kann.

Mit der Schirmplatte 93 ist ein Verlängerungsschild 100 auf gleiche Art und Weise verbunden wie bei der Ausführungsform nach Fig. 11. Die Rückzug-vorrichtung für den Verlängerungsschild 100 ist auch in Fig. 13 im Grundriß dargestellt. Zum Rückzug dient eine Feder 101, die sinngemäß so aufgehängt ist, wie dies bereits mehrmals beschrieben wurde.

In den Fig. 14 und 15 ist eine Ausführungsform dargestellt, bei der mit einem fest angeordneten Seitenschild 102 eine Ablenkfläche 103 verbunden ist. Die Schirmplatte 102 ist am seitlichen Ende des Getriebekastens 104 einer Kreiselegge angeordnet und dort höhenverstellbar mit Hilfe von Lochreihen 106. Die Ablenkfläche 103 ist unmittelbar an die Schirmplatte 102 angebogen, nämlich über eine Abbiegung 105 von mehr als 90°. Die Ablenkfläche 103 reicht mit ihrer Kante 103a bis zu der vertikalen, in Fahrtrichtung F verlaufenden Ebene 106, die durch die Drehachse 107 des der Schirmplatte 102 benachbarten Kreisels 3i verläuft. Der Abstand c

zwischen der Bewegungsbahn der Kreiselzinken und dem Ende der Ablenkfläche 103 ist nur klein. Dieser Abstand liegt vorteilhafterweise im Bereich von 1 cm bis 4 cm.

Wenn bei der Arbeit mit einem Gerät nach den Fig. 14 und 15 von der Kreiselegge nicht zerschlagbare Brocken, insbesondere Steine, angetroffen werden, die die Kreiselegge nicht passieren können, gelangen diese schließlich in den Bereich der Ablenkfläche 103 und werden auf dieser nach außen geleitet, wobei sie den Bereich der Kreiselegge verlassen.

Die Fig. 16 und 17 zeigen eine weitere Lösung, bei der an einer Schirmplatte 108, die die vordere Berührungsebene 109 der Werkzeugbahnen wieder nur wenig überragt, ein Sperrstück 110 angeordnet ist. Das Sperrstück 110 hat eine bogenförmige Fläche 110a, die parallel zur Werkzeugbahn 111 verläuft. Der Abstand e zur Werkzeugbahn kann z.B. 1 cm betragen.

Das Sperrstück 110 verhindert das Eindringen von größeren Stücken zwischen die äußeren Kreisel 3i und die Schirmplatte 108. Größere Steine und dergleichen werden also nach der Seite abwandern müssen. Da wegen der nur kurzen Schirmplatte 108 auch Erde aus dem Bereich der Kreiselegge herausgeschleudert werden kann, ist am hinteren Ende der Schirmplatte 108 eine Streifschiene 112 angeordnet. Die Streifschiene 112 ist (siehe dazu auch Fig. 17) ein rechteckiges Blech, das an einem Halter 113 befestigt ist. Die Streifschiene 112 ist so schräggestellt, daß sie von außen vorne nach hinten innen verläuft und somit die Tendenz hat, nach außen geschleuderte Erde nach innen zu streifen.

Bei der in den Figuren 18 und 19 dargestellten Ausführungsform der Erfindung befindet sich an jedem seitlichen Ende des Getriebekastens 114 der Maschine eine Schirmplatte 115, die um eine vertikale Achse 117 schwenkbar ist. Die Achse 117 ist durch eine vertikale Stange 118 materialisiert, die an der Schirmplatte 115 angeschweißt ist. Die Stange 118 durchgreift eine Hülse 119, die fest mit dem Getriebekasten 114 verbunden, z.B. an diesen, angeschweißt ist. Die Stange 118 ist in der Hülse 119 drehbar.

In der Stange 118 befindet sich eine vertikale Reihe aus Löchern 120. Durch eines der Löcher 120 ist ein Bolzen 121 hindurchgesteckt, der auf der oberen Stirnseite 119a der Hülse 119 aufliegt. Durch Auswahl eines anderen Loches kann die Höhenlage der Schirmplatte 115 geändert werden.

Von der Stange 118 ragt eine horizontale Stange 122 ab, auf der ein Verlängerungsschild 123 drehbar gelagert ist. Zu diesem Zwecke befindet sich am Verlängerungsschild 123 eine Hülse 124, die auf die Stange 122 aufgeschoben ist. Mittels zweier Querstifte 125 und 126 ist die Hülse 124 auf der Stange 122 axial fixiert.

An der Schirmplatte 115 ist ein Federhalter 127 befestigt, vorzugsweise angeschweißt. Am Federhalter 127 ist eine Schraubenzugfeder 128 eingehängt, die mit ihrem anderen Ende am Verlängerungsschild 123 befestigt ist. Die Feder 128 zieht der Verlängerungsschild 123 gegen einen Anschlag 129, der ebenfalls mit der Schirmplatte 115 verbunden ist.

Am hinteren Ende des Getriebekastens 114 ist eine insgesamt mit 130 bezeichnete, als Überlastsicherung ausgebildete Arretierungseinrichtung angeordnet. Die Arretierungseinrichtung hat eine Hülse 131, die am Getriebekasten 114 angeschweißt ist, und zwar im Bereich der hinteren unteren Endkante des Getriebekastens. Die Hülse 131 ist von einer Abreißschraube 132 durchgriffen, die auch ein vertikales Langloch 133 in der Schirmplatte 115 durchgreift. Die Abreißschraube 132 hat einen Kopf 132a, dessen Durchmesser größer ist als die Breite des Langloches 133. Auf das hintere Ende der Abreißschraube 132 ist eine Mutter 134 aufgeschraubt. Die Schraube 132 ist so dimensioniert, daß sie bei gewissen Kräften
abreißt; zu diesem Zweck kann die Abreißschraube mit einer
Einschnürung versehen sein.

Bei der normalen Arbeit der Maschine nach den Figuren 18
und 19 befindet sich die Schirmplatte 115 in der gezeichneten
Stellung, d.h. sie ist relativ zum Getriebekasten 114 starr
befestigt. Der Verlängerungsschild 123 kann ausschwenken, um
vor der Schirmplatte 115 befindliche Hindernisse nach der
Seite durchzulassen. Hierbei wird die Feder 128 zusätzlich
gespannt. Die Feder 128 zieht den Verlängerungsschild 123
in seine gezeichnete Sollage zurück, wenn sie ein Hindernis
passiert hat. Sollte zwischen die Werkzeuge 135 und die
Schirmplatte 115 ein nicht ohne weiteres zertrümmerbares
Hindernis, z.B. ein Stein, gelangen, durch den unzuträgliche Kräfte auf die Schirmplatte 115 und damit (als Reaktionskräfte) auch auf die Werkzeuge 135 ausgeübt werden,
dann werden die von der Abreißschraube 132 aufnehmbaren
Kräfte überschritten und die Abreißschraube bricht, wonach
die Schirmplatte 115 um die vertikale Achse 117 nach außen
verschwenkt, d.h. in Figur 19 gesehen, im Uhrzeigersinn.
Der Verlängerungsschild 123 verschwenkt dabei mit. Das
Hindernis kann nun den Raum zwischen der Schirmplatte 115
und den Werkzeugen 135 passieren, ohne Schaden anrichten
zu können. Nach dem Bruch der Abreißschraube 132 muß die
Bedienungsperson die Schirmplatte 115 in ihre Sollage zurückbewegen und eine als Ersatzteil mitgeführte neue Abreißschraube 132 durch das Langloch 133 und die Hülse 131
einführen und auf das Ende eine Mutter 134 aufschrauben.

Eine Höhenverstellung der Schirmplatte 115 ist auch dann
möglich, wenn die Überlastsicherung 130 die Schirmplatte
115 festhält, da ja die Schirmplatte 115 dank des Langloches 133 relativ zur Abreißschraube 132 bewegbar ist.

- 23 -

Auch eine freie Höhenbeweglichkeit ist möglich, wenn auf die Unterkante 115a der Schirmplatte 115 hebende Kräfte einwirken.

- i -

Ansprüche:

1. Bodenbearbeitungsmaschine mit mehreren in einer quer zur Fahrtrichtung verlaufenden Reihe angeordneten Werkzeugträgern (Kreisel) (3a bis 3i), die mit nach oben ragenden Antriebswellen (6) in einem Gestell (2; 53; 114) gelagert sind und nach unten ragende Werkzeuge (4; 135) aufweisen, wobei an den seitlichen Enden des Gestells (2; 53; 114) Schirmplatten (14; 50; 39; 77; 93; 115) starr befestigt sind, die ein seitliches Wegschleudern von Erde über die Arbeitsbreite der Maschine hinaus verhindern, dadurch gekennzeichnet, daß die vorderen Enden (14c; 50a; 77a) der Schirmplatten (14; 50; 39; 77; 93; 115) etwa bis zur vorderen vertikalen Berührungsebene (20; 51) der von den Werkzeugen (4; 135) beschriebenen Bahnen reichen oder diese nur wenig überragen und daß an den vorderen Enden (14c; 50a; 77a) der Schirmplatten (14; 50; 39; 77; 93; 115) Verlängerungsschilde (27; 72; 87; 100; 123) angeordnet sind, die unter Überwindung einer Rückstellkraft nach außen verschiebbar sind.,

2. Bodenbearbeitungsmaschine nach Anspruch 1, dadurch gekennzeichnet, daß die Schirmplatten (14; 50; 39; 77; 93; 115) die genannte vertikale Berührungsebene (20; 51) um 0 cm bis 4 cm überragen, vorzugsweise um ca. 2 cm.

3. Bodenbearbeitungsmaschine nach einem der vorhergehenden Ansprüche, dadurch gekennzeichnet, daß zur Erzeugung der Rückstellkraft eine Feder (34; 36; 74; 89; 101; 128), vorzugsweise eine Schraubenzugfeder, dient, die mit ihrem einen Ende (74b; 35b) am Verlängerungsschild (27; 42; 72; 87; 100; 123) und mit ihrem anderen Ende (36a; 72a) an einem relativ zur Schirmplatte (14; 50; 39; 77; 93; 115) ortsfesten Punkt angreift, wobei ein Anschlag (35; 48; 76; 129 ) vorgesehen ist, an dem der Verlängerungsschild (27; 42; 72; 87; 100; 123) mit einer von der entsprechend vorgespannten Feder (34; 36; 47; 74; 89; 101; 128) erzeugten Anlagekraft anliegt.

4. Bodenbearbeitungsmaschine nach einem der vorhergehenden Ansprüche, dadurch gekennzeichnet, daß die Verlängerungsschilde (27; 42; 72; 87; 100; 123) schwenkbar sind.

5. Bodenbearbeitungsmaschine nach Anspruch 4, dadurch gekennzeichnet, daß die Verlängerungsschilde (27; 42; 87; 100; 123) um mit den Schirmplatten (14; 39; 77; 93; 115) verbundene Achsen (21; 40b; 88; 122) schwenkbar sind.

6. Bodenbearbeitungsmaschine nach einem der Ansprüche 4 und 5, dadurch gekennzeichnet, daß die Schwenkachse (21; 52; 88; 122) oberhalb des oberen Randes des Verlängerungsschildes (27; 72; 87; 100; 123) liegt.

7. Bodenbearbeitungsmaschine nach Anspruch 6, dadurch gekennzeichnet, daß die Schwenkachse (21; 52; 88; 122) vom oberen Rand des Verlängerungsschildes (27; 72; 87; 100; 123) einen Abstand (h) im Bereich von 10 cm bis 25 cm, vorzugsweise von ca. 20 cm, aufweist.

8. Bodenbearbeitungsmaschine nach einem der Ansprüche 5 bis 7, dadurch gekennzeichnet, daß die Schwenkachse (21; 52; 88; 122) horizontal und parallel zur Fahrtrichtung verläuft.

9. Bodenbearbeitungsmaschine nach einem der Ansprüche 5 bis 7, dadurch gekennzeichnet, daß die Schwenkachse (40b) etwa vertikal verläuft und sich vorzugsweise längs der Vorderkante (42a) der Schirmplatte (42) erstreckt (Fig.7).

10. Bodenbearbeitungsmaschine nach einem der Ansprüche 5 bis 7, dadurch gekennzeichnet, daß die Schwenkachse (40b) schräg angeordnet ist, vorzugsweise in einer vertikalen Ebene, die in Fahrtrichtung verläuft und vorzugsweise am vorderen Ende (42a) des Verlängerungsschildes (42).

11. Bodenbearbeitungsmaschine nach Anspruch 10, dadurch gekennzeichnet, daß die Schwenkachse (40b) von vorne unten nach hinten oben geneigt ist, vorzugsweise mit einer Neigung ($\alpha$) zur Horizontalebene (45) in einem Bereich von 40° bis 90°, vorzugsweise von ca. 50°.

12. Bodenbearbeitungsmaschine nach einem der vorhergehenden Ansprüche, dadurch gekennzeichnet, daß jede Schirmplatte (50) um eine vorzugsweise horizontale (52) oder vertikale (117) Achse seitlich ausschwenkbar ist und durch eine Überlastsicherung (65; 130) in ihrer Arbeitsstellung gehalten ist (Fig. 8 bis 10 bzw. 18, 19).

13. Bodenbearbeitungsmaschine nach Anspruch 12, dadurch gekennzeichnet, daß die Überlastsicherung ein Arretierungselement (65; 132) aufweist, das bei Überschreitung zulässiger Kräfte auf die Innenseite der Schirmplatte (50; 115) bricht.

14. Bodenbearbeitungsmaschine nach Anspruch 13, dadurch gekennzeichnet, daß die Überlastsicherung einen mit der Schirmplatte oder einem Schirmplattenträger (60) verbundenen Zapfen (63) aufweist,, der ein fest mit dem Maschinengestell (53) verbundenes Halteteil (54) durchgreift und daß das Arretierungselement (65) ein den Zapfen (63) durchgreifender Stift (65) ist, der das Herausziehen des Zapfens (63) aus dem Halteteil (54) verhindert.

15. Bodenbearbeitungsmaschine nach Anspruch 14, dadurch gekennzeichnet, daß jeder Verlängerungsschild (72) um die gleiche Achse (52) schwenkbar ist wie die Schirmplatte (50), wobei vorzugsweise die Rückzugseinrichtung (74, 75) für den Verlängerungsschild (72) an Teilen (60) angeordnet ist, die zusammen mit der Schirmplatte (50) ausschwenkbar ist.

16. Bodenbearbeitungsmaschine nach einem der Ansprüche 12 bis 15, dadurch gekennzeichnet, daß die Schwenkachse (52) der Schirmplatte (50) höher liegt als die obere Schirmplattenkante (50a), vorzugsweise um 10 cm bis 25 cm höher, vorzugsweise ca. 20 cm höher (Fig. 8 bis 10).

17. Bodenbearbeitungsmaschine nach einem der Ansprüche 12 bis 15, dadurch gekennzeichnet, daß bei Schwenkbarkeit jeder Schirmplatte (115) um eine im wesentlichen vertikale Achse (117) diese im vorderen Bereich und die Überlastsicherung (130) im Abstand von der Achse (117) liegt, vorzugsweise im hinteren Bereich der Schirmplatte (115) (Fig. 18, 19).

18. Bodenbearbeitungsmaschine nach Anspruch 17, dadurch gekennzeichnet, daß am hinteren Ende des Gestells (114) ein Bolzen (132) angeordnet ist, mit dem die Schirmplatte (115) in ihrer Sollage gehalten ist, wobei der Bolzen (132) als Abreißbolzen ausgebildet ist, oder von einem Scherstift durchgriffen ist, der den Bolzen (132) axial fixiert.

- 5 -

19. Bodenbearbeitungsmaschine nach Anspruch 7, dadurch gekennzeichnet, daß der Bolzen (132) eine Hülse (131) durchgreift, die fest mit dem Gestell (114) verbunden ist, z.B. durch Schweißung.

20. Bodenbearbeitungsmaschine nach einem der Ansprüche 18 und 19, dadurch gekennzeichnet, daß mit jeder Schirmplatte (115) eine vertikale Stange (118) verbunden ist, die drehbar und längsverschiebbar in eine mit dem Gestell (114) verbundene, z.B. an diesem angeschweißte, Hülse (119) eingreift und der Bolzen (132) ein zu der vertikalen Stange (118) paralleles Langloch (133) oder ein Loch einer zu der vertikalen Stange parallelen Lochreihe in der Schirmplatte (115) durchgreift.

21. Bodenbearbeitungsmaschine mit mehreren in einer quer zur Fahrtrichtung verlaufenden Reihe angeordneten Werkzeugträgern (Kreisel), die mit nach oben ragenden Antriebswellen in einem Gestell gelagert sind und nach unten ragende Werkzeuge aufweisen, wobei an den seitlichen Enden des Gestells Schirmplatten starr befestigt sind, die ein seitliches Wegschleudern von Erde über die Arbeitsbreite der Maschine hinaus verhindern, dadurch gekennzeichnet, daß am vorderen Ende jeder Schirmplatte (102) eine schräge Leitfläche (103) angeordnet ist, die bis nahe an den der Schirmplatte (102) benachbarten Kreisel (3e) heranreicht und ausgehend von dem dem Kreisel (3e) benachbarten Ende nach vorne außen verläuft (Fig. 14, 15).

22. Bodenbearbeitungsmaschine nach Anspruch 21, dadurch gekennzeichnet, daß die Leitfläche (103) senkrecht steht.

23. Bodenbearbeitungsmaschine nach einem der Ansprüche 21 und 22, dadurch gekennzeichnet, daß das dem Kreisel (3i) benachbarte Ende (103a) der Leitfläche (103) etwa bis zu einer vertikalen, in Fahrtrichtung verlaufenden und durch die Drehachse (107) des Kreisels (3i) gehenden Ebene (106) reicht.

24. Bodenbearbeitungsmaschine nach Anspruch 23, dadurch gekennzeichnet, daß die Leitfläche (103) durch eine spitzwinklige Abbiegung der Schirmplatte (102) gebildet ist.

25. Bodenbearbeitungsmaschine mit mehreren in einer quer zur Fahrtrichtung verlaufenden Reihe angeordneten Werkzeugträgern (Kreisel), die mit nach oben ragenden Antriebswellen in einem Gestell gelagert sind und nach unten ragende Werkzeuge aufweisen, wobei an den seitlichen Enden des Gestells Schirmplatten starr befestigt sind, die ein seitliches Wegschleudern von Erde über die Arbeitsbreite der Maschine hinaus verhindern, dadurch gekennzeichnet, daß die Vorderkante jeder Schirmplatte (108) bis zur vorderen vertikalen Berührungsebene (109) der von den Zinken beschriebenen Bahnen reichen oder diese nur wenig überragen und daß am vorderen Ende der Schirmplatte (108) ein Verschlußstück (110) angeordnet ist, das bis nahe an die Bewegungsbahn (111) der Werkzeuge des der Schirmplatte benachbarten Kreisels (3i) heranreicht und den Zwischenraum zwischen dieser Bewegungsbahn (111) und der Schirmplatte (108) abschließt (Fig. 16, 17).

26. Bodenbearbeitungsmaschine nach Anspruch 25, dadurch gekennzeichnet, daß der Abstand (e) des Verschlußstückes (110) von der Werkzeug-Bewegungsbahn (111) im Bereich von 1 cm bis 4 cm liegt, vorzugsweise ca. 2 cm beträgt.

27. Bodenbearbeitungsmaschine nach einem der Ansprüche 25 und 26, dadurch gekennzeichnet, daß das Verschlußstück (110) eine bogenförmige Fläche (110a) aufweist, die

parallel zur Werkzeug-Bewegungsbahn (111) verläuft.

28. Bodenbearbeitungsmaschine nach einem der Ansprüche 25 bis 27, dadurch gekennzeichnet, daß die Schirmplatte (108) die genannte vertikale Berührungsebene (109) um 0 cm bis 5 cm überragt, vorzugsweise um 0 cm.

29. Bodenbearbeitungsmaschine nach einem der Ansprüche 25 bis 28, dadurch gekennzeichnet, daß am hinteren Ende jeder Schirmplatte (108) eine Streifschiene (112) befestigt ist, die seitlich über die Enden der Kreiselegge ausgeworfene Erde nach innen streift.

30. Bodenbearbeitungsmaschine nach Anspruch 29, dadurch gekennzeichnet, daß die Streifschiene (112) eine schräggestellte Platte ist, die vorzugsweise an der Schirmplatte (108) befestigt ist, im wesentlichen vertikal steht und von vorne außen nach hinten innen verläuft.

31. Bodenbearbeitungsmaschine nach einem der vorhergehenden Ansprüche, dadurch gekennzeichnet, daß jede Schirmplatte (14; 39; 50; 77; 93, 102; 108; 115) höheneinstellbar ist, z.B. stufenweise mit Hilfe von vertikalen Lochreihen (17; 49; 62; 105; 116; 120) oder stufenlos mit Hilfe von Langlöchern (94, 95).

32. Bodenbearbeitungsmaschine nach Anspruch 31, dadurch gekennzeichnet, daß jeder Verlängerungsschild (27; 42; 87; 100; 123) bzw. jede schräge Leitfläche (103) bzw. jedes Verschlußstück (110) an der zugeordneten Schirmplatte (14; 39; 77; 93; 102; 108) aufgehängt ist.

33. Bodenbearbeitungsmaschine nach Anspruch 31, dadurch gekennzeichnet, daß jeder Verlängerungsschild (72) bzw. jede schräge Leitfläche bzw. jedes Verschlußstück unab- hängig von der zugeordneten Schirmplatte (50) aufgehängt und parallel zur Schirmplatte (50) höhenverstellbar ist.

34. Bodenbearbeitungsmaschine nach einem der Ansprüche 1 bis 30, dadurch gekennzeichnet, daß jede Schirmplatte (77; 93; 115) frei höhenverschiebbar ist, z.B. durch eine parallelogrammartige Aufhängung (78, 79) oder mit Hilfe von schräg angeordneten Langlöchern (94, 95) oder mittels einer vertikalen Stange (118) nach Anspruch 20 und daß jeder Verlängerungsschild (87; 100; 123) bzw. jede schräge Leitfläche bzw. jedes Verschlußstück an der zugeordneten Schirmplatte (77; 93; 115) aufgehängt ist.

35. Bodenbearbeitungsmaschine nach einem der Ansprüche 1 bis 16 und 31 bis 34, dadurch gekennzeichnet, daß jeder Verlängerungsschild (27'; 72; 87; 100; 123) vorne unten eine Auflauffläche (32; 73) aufweist, insbesondere Verlängerungsschilde (87; 100), die frei höheneinstellbar sind.

*Fig.1*

*Fig.2*

Fig.3

Fig.4

0118868

0118868

_Fig.8_

_Fig.9_

_Fig.10_

_Fig.7_

_Fig.5_

_Fig.6_

*Fig. 11*

*Fig.12*

*Fig.13*

Fig.14

Fig.15

Fig.16

Fig.17

_Fig.18_

_Fig.19_